(19) **Europäisches Patentamt European Patent Office Office européen des brevets**

(11) **EP 1 258 403 B1**

(12) **EUROPEAN PATENT SPECIFICATION**

(45) Date of publication and mention
of the grant of the patent:
**16.07.2008 Bulletin 2008/29**

(51) Int Cl.:
***B60S 1/08*** (2006.01)

(21) Application number: **02253424.2**

(22) Date of filing: **16.05.2002**

(54) **Object sensing device and method for windscreen wiper**

Objekt-Sensorvorrichtung und Verfahren für eine Wischervorrichtung

Capteur d'objet et procédé pour une essuie-glace

(84) Designated Contracting States:
**DE FR GB IT**

(30) Priority: **16.05.2001 JP 2001146962**

(43) Date of publication of application:
**20.11.2002 Bulletin 2002/47**

(73) Proprietor: **NILES CO., LTD.**
**Tokyo 143-8521 (JP)**

(72) Inventors:
  • **Kobayashi, Fumitoshi,**
**Nippon Sheet Glass Co., Ltd**
**Osaka-shi,**
**Osaka 541-8559 (JP)**
  • **Yoshida, Harunobu,**
**Nippon Sheet Glass Co., Ltd**
**Osaka-shi,**
**Osaka 541-8559 (JP)**
  • **Tsunetomo, Keiji,**
**Nippon Sheet Glass Co., Ltd**
**Osaka-shi,**
**Osaka 541-8559 (JP)**
  • **Tokuda, Tatsumi,**
**Nippon Sheet Glass Co., Ltd**
**Osaka-shi,**
**Osaka 541-8559 (JP)**

(74) Representative: **Power, Philippa Louise**
**Frank B. Dehn & Co.**
**St Bride's House**
**10 Salisbury Square**
**London EC4Y 8JD (GB)**

(56) References cited:
**EP-A- 0 300 734          WO-A-99/23828**
**US-A- 4 659 220          US-A- 5 523 846**
**US-A- 5 923 027          US-B1- 6 207 967**

## Description

The present invention relates to an object sensing device that can sense an object present on a sensing surface, and a wiper controlling apparatus using the same.

For facilitating the convenience of wiper controlling apparatus, rain sensors for detecting whether or not it is raining are developed. As a conventional object sensing device, a rain sensor that senses a raindrop, which is considered an object present on an automotive windshield, will be described in the following.

In the case of a conventional manually-switched windshield wiper, when a driver notices that it starts raining, he/she has to switch on the wiper manually. In order to ease such inconvenience of manual switching operation, the rain sensor is provided so as to sense the presence of an object such as a raindrop on a sensing surface of an automotive windshield and judge the necessity to operate the wiper.

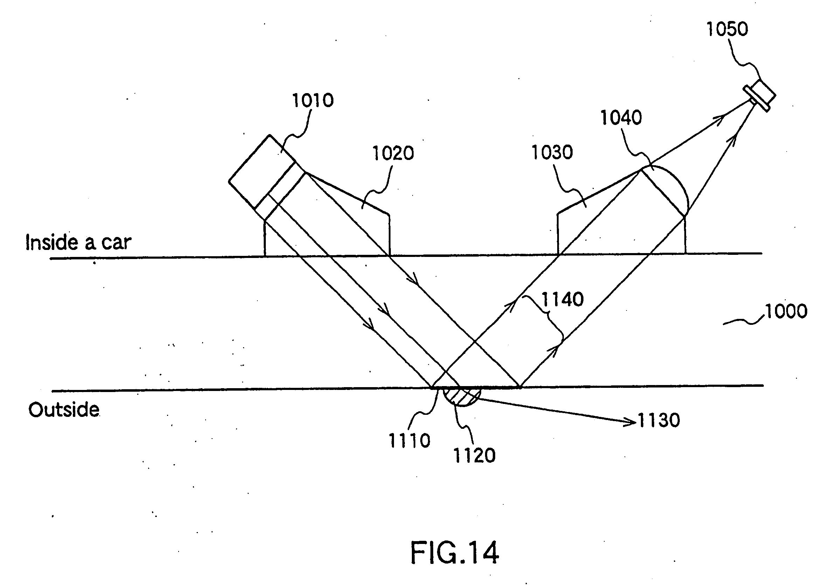

According to methods for sensing a raindrop, various sensing devices have been suggested and known as such conventional rain sensors. One of them is a reflected-light detection type rain sensor. FIG. 14 illustrates a raindrop sensing principle of the conventional reflected-light detection type rain sensor.

The operation of this reflected-light detection type rain sensor is as follows. Rays of light emitted from a light source 1010 are led by a prism 1020 into a windshield 1000 having a refractive index n of about 1.5 formed of a glass plate and enter a sensing surface 1110. When a raindrop 1120 is present on the sensing surface 1110, among the rays of light that enter the sensing surface 1110, a ray of light 1130 that enters a portion on which the raindrop 1120 is present leaves outward from an external surface of the windshield 1000 because a total reflection condition is not satisfied owing to the presence of the raindrop, which has a refractive index n of about 1.3. Thus, this ray of light 1130 is not detected by a photo-detector 1050.

On the other hand, among the rays of light that enter the sensing surface 1110, rays of light 1140 that enter a portion on which no raindrop is present are totally reflected at the external surface of the windshield 1000 because the total reflection condition is satisfied by the presence of the air having a refractive index n of 1. The totally reflected rays of light 1140 then leave for the inside of the car without being totally reflected at an internal surface owing to the presence of a prism 1030 provided on the internal surface of the windshield 1000 facing inside the car. These rays of light are led to an optical sensor portion on the photo-detector 1050 by a lens 1040.

As described above, an amount of the light detected by the photo-detector 1050 decreases when the raindrop 1120 is present, and the amount of the received light decreases with an increase in the area where the raindrop 1120 covers the sensing surface 1110. The reflected-light detection type rain sensor senses variation of this light amount level over time and detects the presence of the raindrop on the sensing surface 1110. The above description is directed to the raindrop sensing principle of the conventional reflected-light detection type rain sensor.

However, the conventional rain sensor described above has the following problems.

The conventional rain sensor detects the presence of the raindrop with the variation of the light amount level in the photo-detector. This detection generally requires the setting of a threshold. When the threshold is fixed, it is difficult to detect the raindrop accurately because of a surface condition of the windshield and temperature characteristics of photo emission element. Therefore, the threshold has to be adjusted or updated whenever necessary. Such adjusting or updating often makes the control complicated.

Moreover, since a base level of the light amount varies owing to external light, the threshold sometimes has to be adjusted accordingly.

US 4659220 discloses optical inspection of semiconductor wafers using a photodiode array which detects light scattered normally to the wafer by defects when the wafer is illuminated at grazing incidence. A microprocessor analyses the digitised data from the photo detector array and determines 0-1 (positive) and 1-0 (negative) transitions between adjacent digital pixel values which mark e.g. the beginning and end points of the width of metallisation stripes

US5923027 discloses a windshield moisture sensor for operating a windshield wiper in which the spatial frequency components of the image of light are detected by an array sensor as a measure of moisture on the windshield in which rain drops give rise to sharp edges which have high spatial frequency components. In a further embodiment the size of a reflected spot from the windshield is used to determine the quantity of fog by determining the distance between horizontal edges of the spot image.

WO9923828 discloses a rain sensor for wiper operation control in which the edges of rain droplets are detected by a function such as the bright or dark peripheral ring around the droplets and this information is used to determine the number of droplets, or their density, or the "size" of their edges i.e. how sharp or smooth the edge is which permits discrimination between e.g. raindrops and fog for comparison with a threshold.

With the foregoing problems in mind, it is an object of the present invention to provide an object sensing device in which a threshold does not have to be adjusted or updated even under the influence of a surface condition of a windshield or external light, and a wiper controlling apparatus using the same.

It is a further object of at least the preferred embodiments of the present invention to provide an object sensing device that can estimate the size of a target object present on a sensing surface.

From a first aspect, the invention provides an object sensing device comprising:

a light source for irradiating a sensing surface, which is an external surface of a transparent substrate;
an imaging optical system lens for forming an image by a light from the sensing surface; and
a photo-detector array for receiving the image formed by the imaging optical system lens, the photo-detector array including a plurality of photo-detectors;

wherein the photo-detector array receives the light from the imaging optical system lens, and outputs a signal pattern that depends on the level of light detection signals obtained from the respective photo-detectors and the positional arrangement of the photo-detectors and corresponds to a condition of an object present on the sensing surface, wherein the object sensing device further comprises

a difference part for obtaining a differential signal of signal outputs from adjacent photo-detectors according to their arrangement in the photo-detector array, and
an object judging part for judging a presence of the object by detecting a presence of a pair of a positive peak and a negative peak in a pattern of the differential signal obtained by the difference part, characterised in that the object sensing device further includes an estimating part for estimating a covering ratio of the object present on the sensing surface from a ratio of a total length of the photo-detector array to a sum of lengths, each being a length between a pair of the photo-detectors on the photo-detector array corresponding to a pair of the positive peak and the negative peak in the differential signal pattern.

Moreover, preferably, the above-described object sensing device further includes an estimating part for estimating a size of the object present on the sensing surface by converting a length between a pair of the photo-detectors on the photo-detector array corresponding to a pair of the positive peak and the negative peak in the differential signal pattern into a length on the sensing surface.

Alternatively, the above-described object sensing device is characterised in that it further comprises an estimating part for estimating a covering ratio of the object present on the sensing surface from a ratio of a sum of signal lengths of the differential signal pattern, each signal length being a distance between positions of the pair of the positive peak and the negative peak along a differential signal arrangement, with respect to a total length of the differential signal pattern. Here, the "total length" of the differential signal pattern and the "signal length" between positions of the pair of the positive peak and the negative peak refer to the length along the signal arrangement direction of the differential signal pattern.

In the above-described object sensing device, it is preferable that the object judging part is provided with a threshold value for each of the positive peak and the negative peak. Also, in the above-described object sensing device, it is preferable that the object is a raindrop or a muddy water droplet.

A wiper controlling apparatus is characterized by controlling a wiper using information from any one of the above-described object sensing devices of the present invention.

The present invention is characterized in that a pattern signal of an image on the sensing surface first is obtained using the imaging optical system lens and the photo-detector array. The present invention further is characterized in that a difference between signals from adjacent photo-detectors is calculated in that pattern signal, thus detecting the presence of a raindrop or the like by the presence of the peaks in the differential signal pattern.

In the present invention, the imaging optical system lens is required. However, since the detection principle itself basically has an excellent SN ratio as described later, this lens does not need to form an image properly but may be defocused slightly as long as a sufficient SN ratio is maintained.

In the object sensing device of the present invention, the light source irradiating the sensing surface is not specifically limited but may be any light source listed below:

(1) a total reflection light source arranged so that the emitted light is totally reflected by the sensing surface,
(2) a scattering light source arranged so that a scattered light can be obtained from an object having a light-scattering property, and
(3) external light such as natural light or streetlight. Furthermore, the above light sources may be used in combination as necessary.

From a further aspect, the present invention provides a method for sensing an object present on a sensing surface, which is an external surface of a transparent substrate, with a light source for irradiating the sensing surface, an imaging optical system lens for forming an image by a light from the sensing surface, and a photo-detector array for receiving the image formed by the imaging optical system lens, the photo-detector array including a plurality of photo-detectors, the object sensing method comprising:

with the photo-detector array, receiving the light from the imaging optical system lens, and outputting a signal pattern that depends on the level of light detection signals from the respective photo-detectors and the positional arrangement of the photo-detectors and corresponds to a condition of the object present on the sensing surface;
obtaining a differential signal of signal outputs from adjacent photo-detectors according to their arrangement in the photo-detector array; and
judging a presence of the object by detecting a presence of a pair of a positive peak and a negative peak in a pattern of the obtained differential signal characterised in that a covering ratio of the object present on the sensing surface is estimated from a ratio of a total length of the photo-detector array to a sum of lengths, each being a length between a pair of the photo-detectors on the photo-detector array corresponding to a pair of the positive peak and the negative peak in the differential signal pattern.

Furthermore, in the above-described sensing method, it is preferable that a size of the object present on the sensing surface is estimated by converting a length between a pair of the photo-detectors on the photo-detector array corresponding to a pair of the positive peak and the negative peak in the differential signal pattern into a length on the sensing surface.

In the above-described sensing method, it is preferable that the presence of the object is judged based on a threshold value for each of the positive peak and the negative peak.

Alternatively, the method is characterised in that a covering ratio of the object present on the sensing surface is estimated from a ratio of a sum of signal lengths of the differential signal pattern, each signal length being a distance between positions of the pair of the positive peak and the negative peak along a differential signal arrangement, with respect to a total length of the differential signal pattern.

Preferred embodiments of the invention will now be described, by way of example only, and with reference to the accompanying drawings in which:

FIG. 1 illustrates a basic configuration of an object sensing device of the present invention.
FIGs. 2A and 2B are graphs showing examples of signal patterns obtained by the object sensing device including an imaging optical system and a photo-detector array.
FIGs. 3A and 3B illustrate an example of a total reflection light source.
FIG. 4 schematically illustrates the photo-detector array.
FIG. 5 schematically illustrates how raindrop images overlap photo-detectors of the photo-detector array.
FIGs. 6A and 6B illustrate how an optical path from the total reflection light source changes depending on the presence or absence of a target object.
FIGS. 7A and 7B are graphs showing examples of a signal pattern and a differential signal pattern (without external light) respectively, and FIG. 7C schematically illustrates the definition of a total length of the differential signal pattern and a signal length between positions of a pair of positive and negative peaks.
FIGs. 8A and 8B are graphs showing examples of a signal pattern and a differential signal pattern (with external light), respectively.
FIGs. 9A and 9B are graphs showing examples of a signal pattern and a differential signal pattern, respectively, when using a scattering light source (without external light).
FIGs. 10A and 10B illustrate detection states using the scattering light source.
FIGs. 11A and 11B are graphs showing examples of a signal pattern and a differential signal pattern (with external light), respectively.
FIG. 12 illustrates a detection state using external light.
FIG. 13 schematically illustrates how the object sensing device is mounted on a windshield.
FIG. 14 illustrates a basic configuration of a conventional object sensing device.

The following is a description of embodiments of an object sensing device according to the present invention, with reference to the accompanying drawings.

(Basic Configuration)

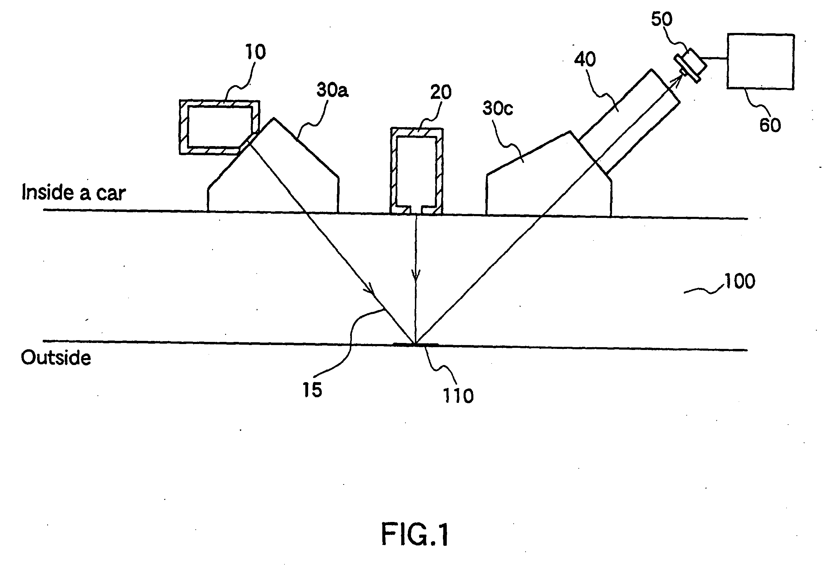

FIG. 1 illustrates a basic configuration of the object sensing device according to the present invention. A windshield glass 100 is used as a transparent substrate, a linear light source 10 is provided on a surface of the glass 100 inside a car, and a light is led via a prism 30a into the glass 100. At this time, the light 15 enters the glass 100 at an angle so as to be totally reflected by a sensing surface 110, which is an external surface of the glass.

The light totally reflected by the sensing surface 110 is led via a prism 30c to a rod lens array 40 serving as an imaging optical system lens and then forms an image on an image sensor 50 serving as a photo-detector array. A signal outputted from the image sensor 50 is connected to a signal processing module 60. This figure also shows a scattering light source 20, which will be described later.

(Preliminary Examination)

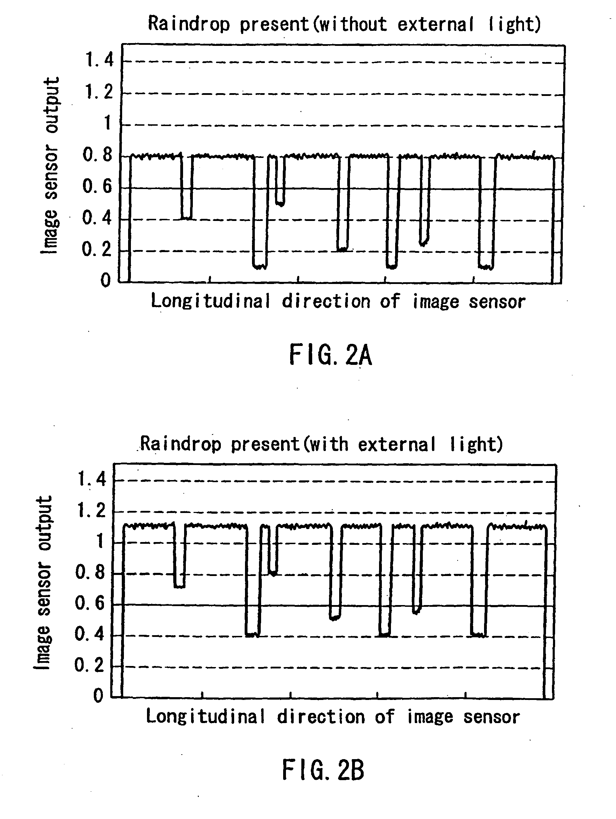

In the object sensing device including the imaging optical system lens and the photo-detector array as described above, a signal pattern obtained from the photo-detector array will be described. FIGs. 2A and 2B each show an example of the signal pattern. In this case, the target object was a raindrop.

FIG. 2A shows the case without external light, while FIG. 2B shows the case with external light. In FIG. 2A, the signal pattern has falling portions corresponding to portions of raindrops present on the sensing surface. In FIG. 2B, it is indicated that the entire signal pattern is shifted upward owing to an influence of the external light. The shape of the signal pattern corresponding to the portions of the raindrops and the degree of signal decrease in these falling portions are the same as those in the case without an influence of the external light.

With respect to these signal patterns, the detection of the object was examined using a fixed threshold. As the fixed threshold, for example, 0.6 V was applied to the cases of the signal patterns shown in FIGs. 2A and 2B. The number of the raindrops actually present was seven.

When there was no influence of external light as shown in FIG. 2A, it was possible to detect accurately the number of raindrops actually present by using this threshold. The specific number was seven.

On the other hand, when there was an influence of external light as shown in FIG. 2B, since the signal level corresponding to the portions with no raindrop was raised, it was indicated that the number of raindrops actually present cannot be detected accurately by using the threshold of 0.6 V. The specific number detected here was five.

When there is an influence of external light, the intensity of the external light can be monitored so that the threshold can be shifted accordingly. However, this tends to make the control complicated.

As becomes clear from this preliminary examination, in the object sensing device including the imaging optical system lens and the photo-detector array, it is difficult to detect raindrops accurately by using a fixed threshold.

Therefore, the present invention allows an accurate detection by a difference operation of the signal pattern from the object sensing device including the imaging optical system lens and the photo-detector array.

(First Example)

In the basic configuration illustrated by FIG. 1, an example of using a total reflection light source will be described first.

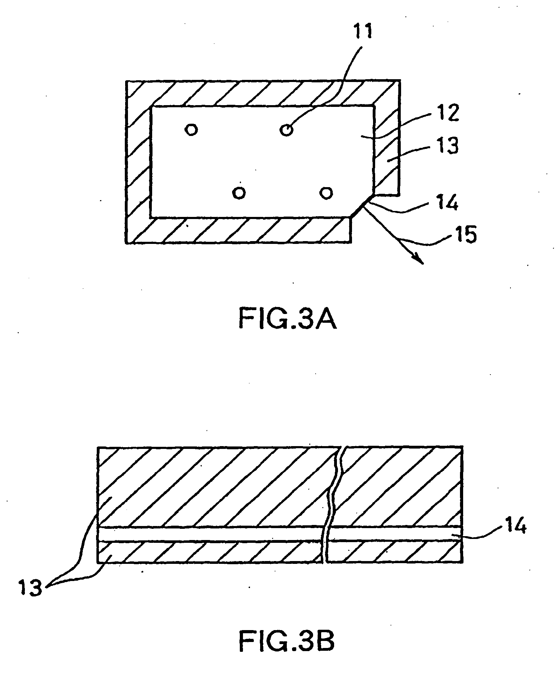

As shown in FIGs. 3A and 3B, the total reflection light source allows light from photo emission elements 11 provided at an end of a photo-conductor 12 to propagate inside the photo-conductor 12 and emits a light 15 linearly from an emitting surface 14. FIG. 3A shows the end of the photo-conductor, while FIG. 3B shows the emitting surface.

This light 15 is led via the prism 30a into the transparent glass substrate (windshield), totally reflected by the sensing surface 110, led via the prism 30c to the rod lens array 40 serving as the imaging optical system and then enters the image sensor 50 serving as the photo-detector array to form an image.

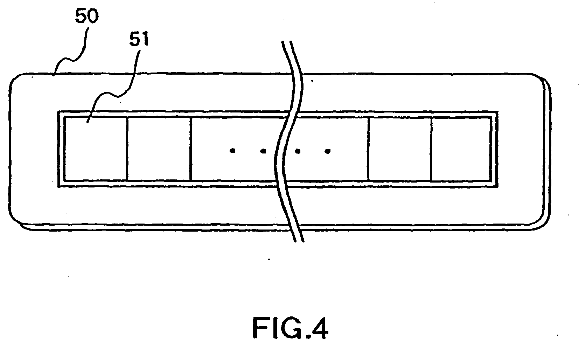

This image sensor 50 has a plurality of minute photo-detectors 51 arranged linearly (see FIG. 4). In this case, the sensing surface has an oblong shape with a certain length extending straight along the arrangement direction of the minute photo-detectors 51 in the image sensor 50.

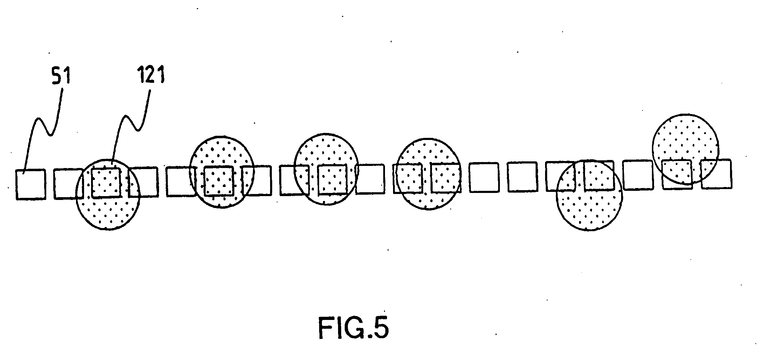

Since raindrops 120 impact on the sensing surface 110 at random, images 121 of the raindrops on the sensing surface overlap the plurality of the minute photo-detectors 51 in various manners, as shown in FIG. 5.

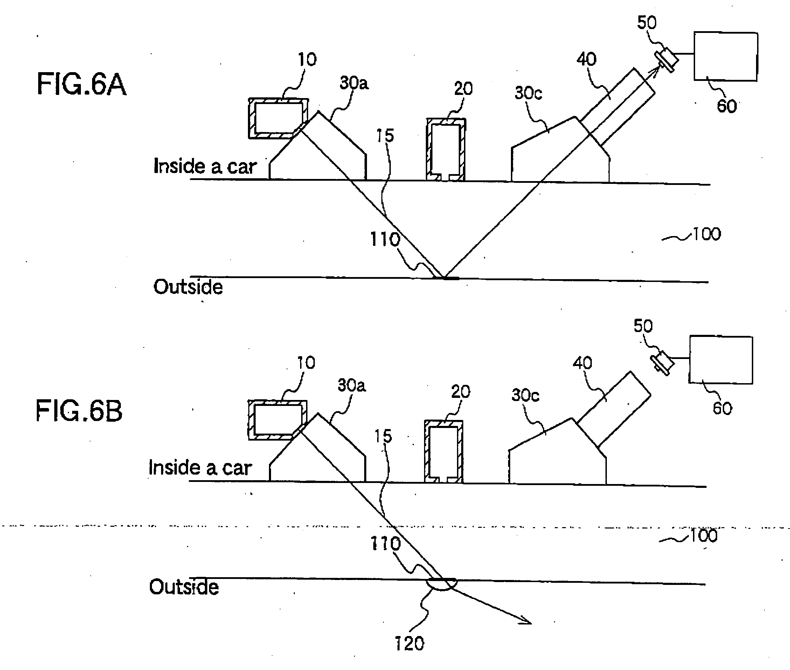

FIGs. 6A and 6B show the change in an optical path of the emitted light 15 from the total reflection light source depending on the presence or absence of the raindrop on the sensing surface. In FIG. 6A, since no raindrop is present, a total reflection condition of the sensing surface is satisfied, so that the emitted light 15 enters the image sensor 50. On the other hand, in FIG. 6B, the total reflection condition of the sensing surface is not satisfied owing to the presence of the raindrop, so that the emitted light 15 goes outward and does not reach the image sensor 50.

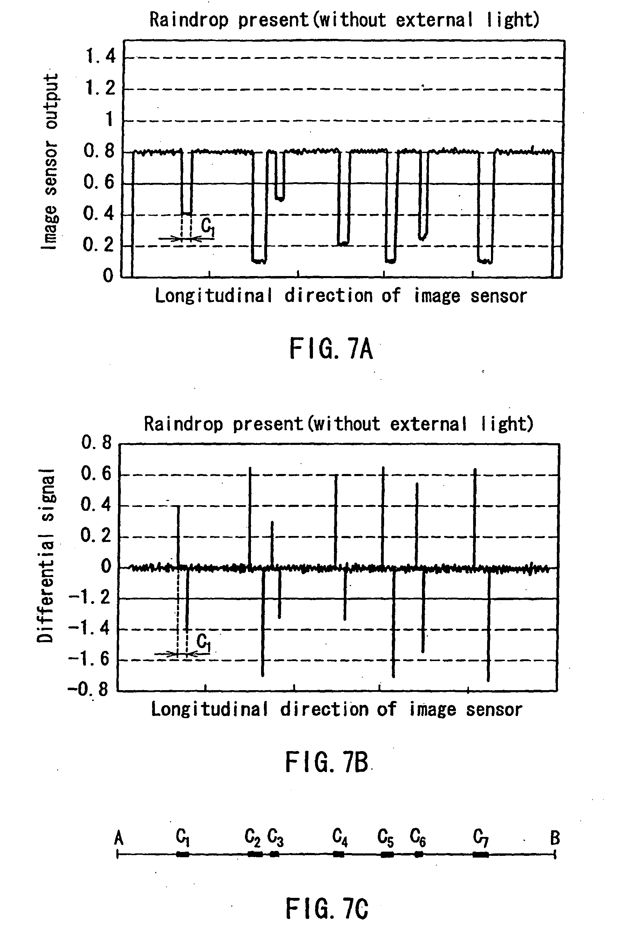

Consequently, there occurs a decrease in an output of the minute photo-detectors 51 of the image sensor 50 corresponding to minute regions on which raindrops are present (see FIG. 7A). The degree of decrease varies depending on how the raindrops overlap the sensing surface. In other words, it also is indicated that, when attempting to process with a fixed threshold and judge such a signal pattern, an accurate detection is difficult because of an influence of external light etc., as illustrated by FIGs. 2A and 2B.

Accordingly, when the difference between the outputs of adjacent photo-detectors in the image sensor 50 is calculated, a differential signal pattern as shown in FIG. 7B is obtained. This figure indicates that the pattern that is processed by a difference operation has pairs of a positive peak and a negative peak corresponding to the presence of raindrops.

The detection according to the present invention basically can achieve a high SN ratio. Furthermore, since the signal is processed by a difference operation, an accurate detection can be achieved even when the raindrop overlaps the sensing surface only slightly.

In order to detect the presence of these peaks, it is appropriate to set a certain threshold and detect intersection points of the differential signal pattern and the threshold, for example. At this time, if the threshold is set suitably, an accurate detection can be achieved with a fixed threshold. In an example of FIG. 7B, the threshold is set to be $\pm0.2$ V. Since noise is present inevitably in any devices, it is appropriate to set this threshold at least at a noise level. Basically, absolute values of the thresholds used for detecting the positive and negative peaks can be the same.

As an example of the imaging optical system, a rod lens array SLA (SELFOC[R] Lens Array) manufactured by Nippon Sheet Glass Co., Ltd., which is an erecting equal-magnification optical system lens forming an erect image, was used. However, it is not limited to the rod lens array but may be a homogeneous lens as long as it functions as the imaging optical system lens. Also, the magnification of the optical system lens is not required to be equal but may be unequal. As the photo-detector array, an image sensor (manufactured by SII, 8 dot/mm, 60 mm in length (480 dots), and output range of 0 to 1.5 V) was used.

(Difference Operation)

First, outputs from the photo-detectors of the image sensor are converted to be digital by an A/D converter. The converted outputs are expressed by P1, P2, P3, ..., P480 along the arrangement of the respective photo-detectors.

Next, a difference operation for calculating the difference between signals from the adjacent photo-detectors is carried out, for example, in such a manner as indicated below:

$$\text{Sn = Pn - P(n + 1) (where n = 1 ... 479)}$$

In this case, a leading edge of the raindrop corresponds to the positive ("+ side") peak, while a trailing edge thereof corresponds to the negative ("-side") peak.

The leading edge of the raindrop corresponds to the negative peak, while the trailing edge thereof corresponds to the positive peak, when the difference between the signals from the adjacent photo-detectors is calculated in the following manner instead.

$$\text{Sn = P(n + 1) - Pn (where n = 1 ... 479)}$$

(Judgment of Presence/Absence of Object)

As described above, a pair of the positive and negative peaks is present in correspondence with a raindrop. Accordingly, when a pair of the peaks is detected, it can be judged that a raindrop is present. When there is only one of the peaks, it cannot be judged whether or not a raindrop is present.

The following is an explanation of an examination conducted with respect to the case where raindrops are present on the sensing surface corresponding to both end portions of the image sensor. In this case, the difference operation of Sn = Pn - P(n + 1) is carried out, where the negative peak is located at the beginning of the signal pattern that has been processed by the difference operation. This peak corresponds to the trailing edge of the raindrop.

Similarly, the positive peak is located at the tail end of the signal pattern that has been processed by the difference operation. This peak corresponds to the leading edge of the raindrop.

Generally, from the presence of either one of the peaks, it cannot be judged whether or not a raindrop is present. However, when there is a peak at the end portions of the image sensor, for example, when there is a peak corresponding to the trailing edge of a raindrop at the end thereof where Pn is small, it can be judged that a raindrop is present.

Also, when there is a peak corresponding to the leading edge of a raindrop at the end where Pn is large, it can be judged that a raindrop is present.

(Comparison with Preliminary Examination Example)

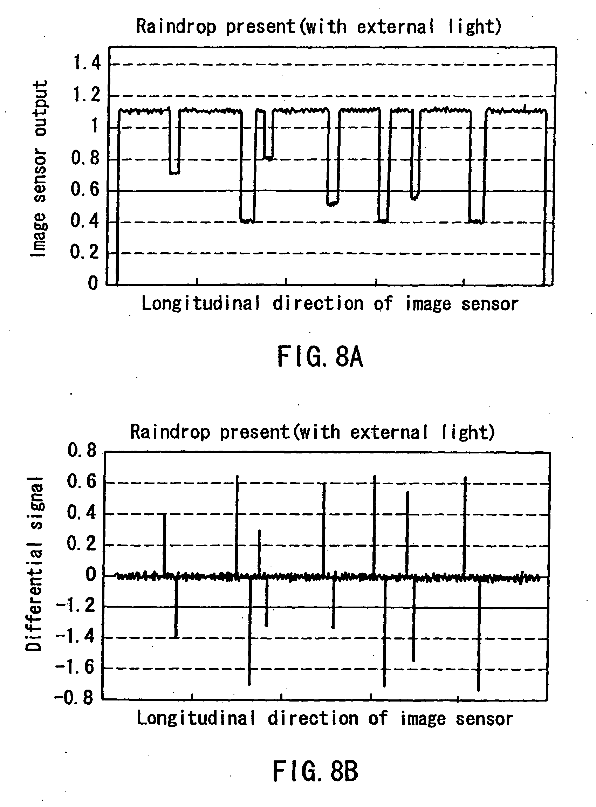

The influence of external light was compared specifically with respect to the above-described preliminary examination example and the first example in which the difference operation was carried out (see FIGs. 7A and 7B, FIGs. 8A and 8B and Table 1). In this case, the number of raindrops actually present was seven.

First, the case where there is no influence of external light has been already described above. On the other hand, the case where there is an influence of external light is shown in FIGs. 8A and 8B. Incidentally, the threshold was set to be $\pm0.2$ V in the example of FIG. 8B as in FIG. 7B. As becomes clear from FIG. 8B, after the difference operation, which characterizes the present invention, there are peaks corresponding to a leading edge and a trailing edge of an object.

Furthermore, as becomes clear from the comparison of FIGs. 7B and 8B, their peak patterns substantially match each other. As described above, by carrying out the difference operation, it is possible to obtain the peaks corresponding to the edges of the object regardless of the influence of external light.

Table 1

| The number of detected raindrops | | |
|---|---|---|
| | External light | |
| | Yes | No |
| Fixed threshold operation | 5 | 7 |
| Difference operation | 7 | 7 |

Moreover, with respect to the number of detection, as becomes clear from FIGs. 7B and 8B and Table 1, the difference operation is not affected by the external light and can detect raindrops accurately. In addition, the difference operation, of course, can detect accurately a covering ratio of the raindrop in the sensing surface, contrary to the fixed threshold operation.

(Estimation of Object Size)

The length between a pair of the photo-detectors on the photo-detector array corresponding to a pair of the positive peak and the negative peak on the differential signal pattern is converted into the length on the sensing surface, thereby estimating the size of a liquid drop present thereon.

In the configuration using the equal-magnification optical system lens of the first example, the size (length) of a raindrop overlapping the sensing surface can be calculated by counting the number of photo-detectors located between a pair of the photo-detectors on the photo-detector array corresponding to a pair of the positive peak and the negative peak on the differential signal pattern and multiplying the number by a photo-detector pitch. This size (length) information may be utilized for controlling a windshield wiper. For example, when the raindrop is estimated to be large, it is appropriate to control the wiper so as to drive it at a higher frequency. Incidentally, because how the raindrop overlaps the sensing surface varies case by case as described above, this estimated length on the sensing surface is not always the exact size of the raindrop.

When the imaging optical system lens is not an equal-magnification lens but an unequal-magnification lens, the length on the photo-detector array can be multiplied by this magnification and converted into the length on the sensing surface. In other words, the size of a liquid drop present on the sensing surface is estimated by considering the ratio between the actual length on the sensing surface and the length of an image formed on the photo-detector array and converting the length between the pair of the photo-detectors on the photo-detector array corresponding to the pair of the positive peak and the negative peak on the differential signal pattern into the actual length on the sensing surface.

In the case where raindrops are present on the sensing surface corresponding to both the end portions of the image sensor described above at the time of estimating the object size, it is difficult to estimate the size of the raindrops corresponding to these portions.

(Estimation of Covering Ratio)

The covering ratio of an object on the sensing surface is estimated from the ratio between the total length of the photo-detector array and the sum of the lengths, each being the length between the pair of the photo-detectors on the photo-detector array corresponding to the pair of the positive peak and the negative peak on the differential signal pattern.

As in the estimation of the size, the covering ratio of an object on the sensing surface is estimated by counting the number of all the photo-detectors located between the pair of the photo-detectors on the photo-detector array corresponding to the pair of the positive peak and the negative peak on the differential signal pattern and dividing the counted number by the total number of the photo-detectors. This covering ratio also can be used for controlling a windshield wiper. For example, when the covering ratio is estimated to be high, it is appropriate to control the wiper so as to drive it at a higher frequency.

The above-described covering ratio also can be calculated directly from the differential signal pattern. In other words, the covering ratio of an object on the sensing surface may be estimated from the ratio of the sum of signal lengths of the differential signal pattern, each being a signal length between positions of the pair of the positive peak and the negative peak along a differential signal arrangement, with respect to the total length of the differential signal pattern.

In the present invention, the "total length" of the differential signal pattern and the "signal length" between positions of the pair of the positive peak and the negative peak refer to the lengths along the direction in which the photo-detectors are arranged (a longitudinal direction of the image sensor) and correspond to the lengths along a horizontal axis in FIG. 7B showing an example of the differential signal pattern. Each portion corresponding to C1 is schematically shown in FIGs. 7A and 7B. FIG. 7C schematically illustrates this definition. The total length of the differential signal pattern is the length between A and B on the horizontal axis shown in FIG. 7C, the signal length between positions of the pair of the positive peak and the negative peak is each length of C1 to C7 on the horizontal axis shown in FIG. 7C, and the sum thereof is the sum of the lengths of C1 to C7.

The covering ratio in the example of FIG. 7C equals (C1 + C2 + ... + C7)/AB.

In the case where raindrops are present on the sensing surface corresponding to both of the end portions of the image sensor described above when estimating the covering ratio, the raindrops corresponding to these end portions may be included in the estimation of the covering ratio.

It is appropriate that a difference part for carrying out the difference operation, an object judging part for judging the presence/absence of an object, a part for estimating the object size, an estimating part for estimating the covering ratio described above all should be installed in the signal processing module 60.

(Second Example)

Although the above-described first example has been directed to an example of using the total reflection light source, the second example is directed to a case of using a scattering light source.

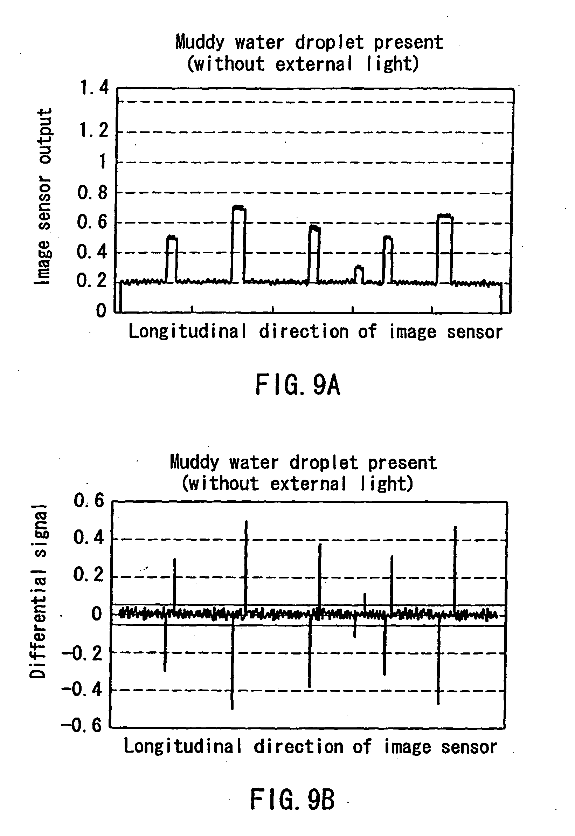

The second example is the case where not the total reflection light source but the scattering light source is operated in the object sensing device shown in FIG. 1. A typical signal pattern obtained in this second example is shown in FIGs. 9A and 9B, where the threshold is set to be +0.05 V.

First, in the second example, the obtained signal pattern has rising portions corresponding to the presence of muddy water droplets, which are scattering objects. In other words, a light from the scattering light source is scattered in the portions where the muddy water droplets are present. Since a scattered light enters the photo-detector array, there is an increase in signal in the portions where the muddy water droplets are present. Consequently, the signal pattern having rising portions are obtained, contrary to the first example in which the presence of raindrops reduces the reflected light.

Although a signal level of the scattering light generally is low, the presence of the muddy water droplets can be detected accurately because the object sensing device of the present invention can conduct a detection with an excellent SN ratio.

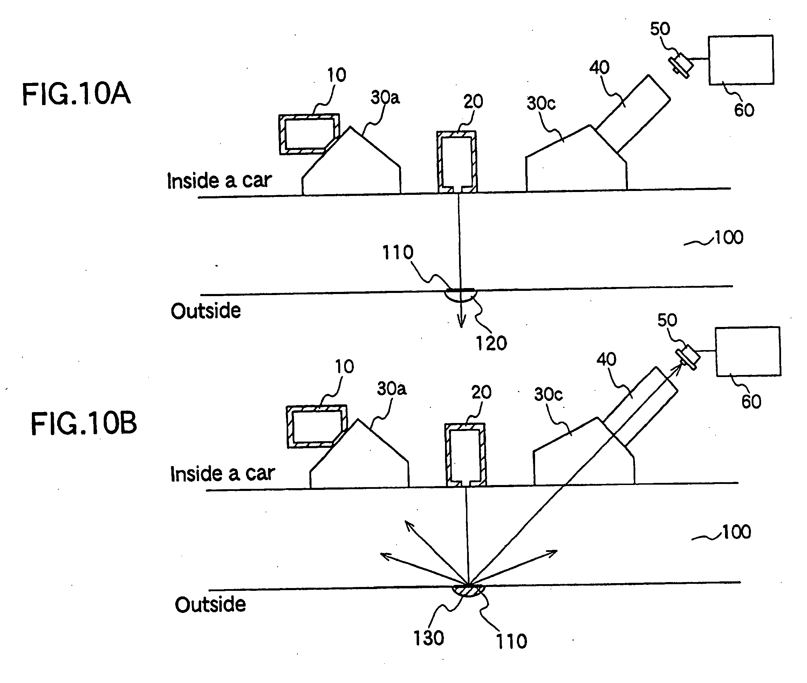

FIGs. 10A and 10B illustrate detection states in the second example. FIG. 10A shows the case where the raindrop 120 is present. Since the raindrop is transparent and does not have a light-scattering property, no scattering light is generated, so that the signal level of the image sensor 50 does not increase. Thus, the signal pattern and the differential signal pattern that are obtained directly are basically flat, which does not allow for detection of raindrops.

On the other hand, FIG. 10B shows the case where a muddy water droplet 130 is present. Since the muddy water droplet has a light-scattering property, a part of the scattering light reaches the photo-detector array. Therefore, the signal pattern shown in FIG. 9A is obtained.

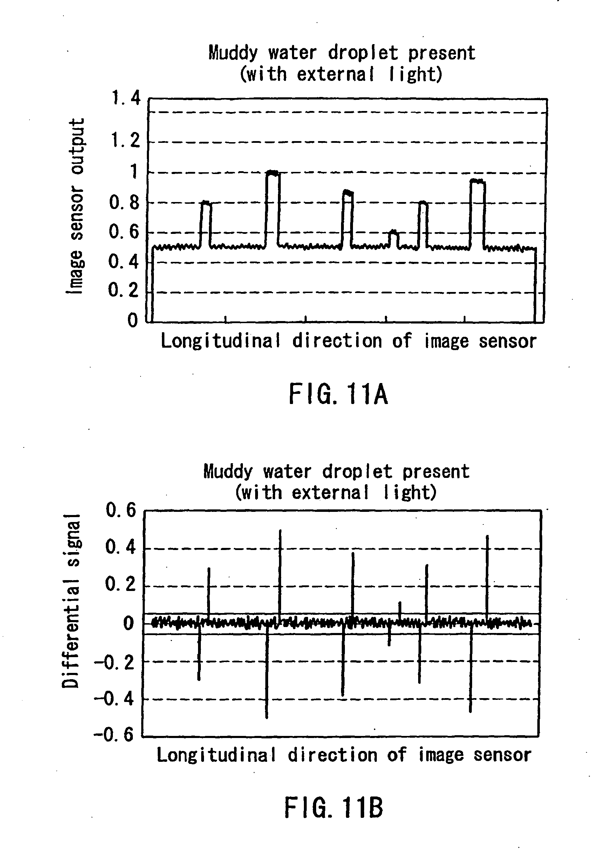

Moreover, FIG. 11 shows a signal pattern under an influence of external light. As becomes clear from the comparison of FIGs. 9 and 11, the signal pattern corresponding to the muddy water droplets in the case where the muddy water droplet is present on the surface is the same even under the influence of external light, but the entire pattern is shifted upward. Furthermore, after the difference operation, which characterizes the present invention, it becomes clear that the peak corresponding to the edge of the object can be obtained even under the influence of external light. In the example of FIG. 11, the threshold also is set to be $\pm 0.05$ V. Table 2 shows the difference in the number of detected raindrops depending on the influence of external light. In this case, the number of raindrops actually present was six.

Table 2

| The number of detected raindrops | | |
|---|---|---|
| | External light | |
| | Yes | No |
| Fixed threshold operation | 5 | 2 |
| Difference operation | 6 | 6 |

As becomes clear from Table 2, when the difference operation is carried out, it is possible to detect the number of raindrops accurately regardless of the influence of the external light.

(Third Example)

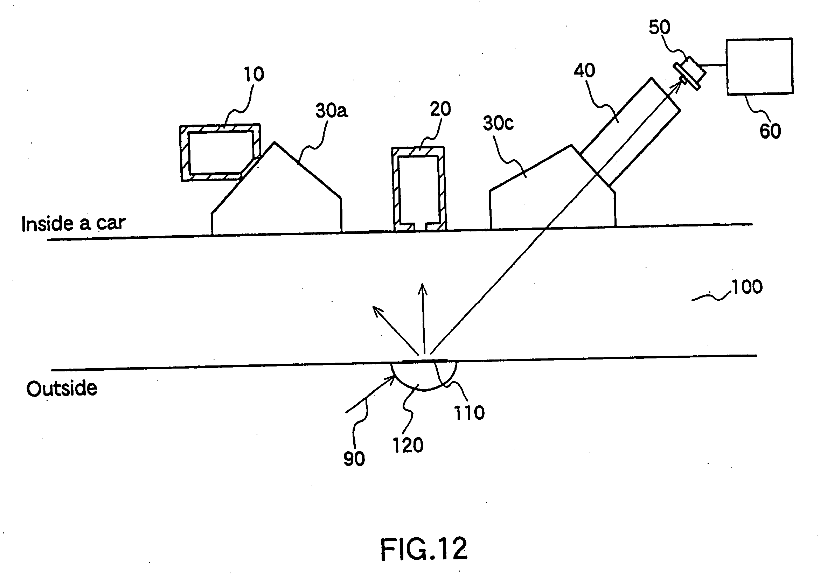

Although the above-described first example has been directed to an example of using the total reflection light source, the third example is directed to a case of using external light (see FIG. 12).

The third example is the case where, in the object sensing device shown in FIG. 1, neither the total reflection light source 10 nor the scattering light source 20 is operated and raindrops are detected by an external light 90. The signal pattern obtained in the present example also has rising portions corresponding to the presence of raindrops.

In the configuration of the third example, the external light 90 is made to enter the transparent substrate 100 owing to the presence of a transparent object, for example, the raindrop 120. As a result, since the external light enters the photo-detector array 50, the signal level increases in the portions where the transparent object is present. Thus, the signal pattern having rising portions is obtained, contrary to the first example in which the presence of raindrops reduces the reflected light.

As described above, the transparent object can be detected using the external light as in the case of using the total reflection light source. However, it should be noted that the pair of the positive and negative peaks corresponding to a raindrop appear in a reversed order.

It is preferable that the total reflection light source and the scattering light source used in the present invention correspond to the arrangement of the photo-detector array. More specifically, they preferably are a light source emitting a linear light.

When using such a linear light source, it is fairly difficult to achieve a uniform light quantity across a linear direction. Furthermore, when applying the object sensing device according to the present invention to an automotive windshield, which is a curved glass sheet, is examined, the base line of the output of the photo-detector array cannot be made substantially stable and often becomes wavy owing to the curved sensing surface, the mounting error, and the above-described variation of light quantity.

Under such a situation where the base line is unstable, it becomes more difficult to detect an object accurately by the conventional method of using a fixed threshold.

On the other hand, in the object sensing device of the present invention, the signal from the photo-detector array is processed by a difference operation. This difference operation can remove the above-mentioned waviness and generate reliably the peaks corresponding to the ends of the object, thus allowing an accurate detection.

(Application Example)

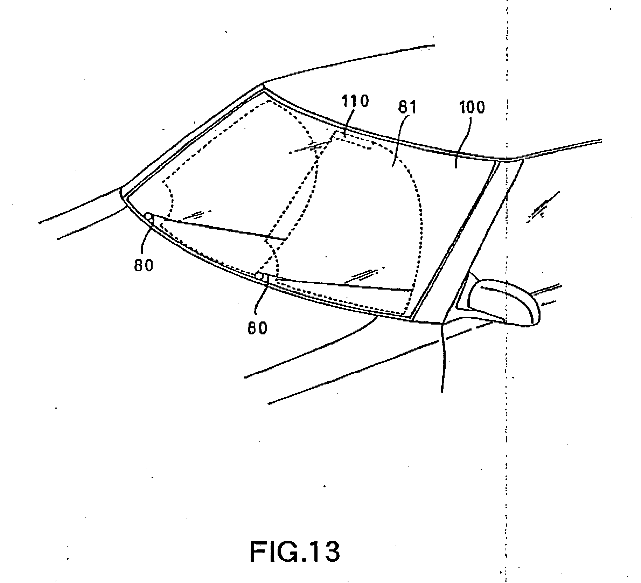

By using a signal from the object sensing device illustrated in the examples described above, an automotive windshield wiper can be controlled. FIG. 13 schematically illustrates how the object sensing device is mounted on the windshield 100. The sensing surface 110 of the object sensing device is provided in a wiping area 81 of a wiper 80.

More specifically, it is appropriate to sense an impact of a raindrop first and drive the wiper. Also, when the size of the raindrop is estimated to be large, it is appropriate to control the wiper so as to drive it at a higher frequency. Furthermore, when the covering ratio is estimated to be high, it also is appropriate to control the wiper so as to drive it at a higher frequency. In this manner, the wiper can be controlled according to the condition of the windshield. Such a control appropriately is carried out in a wiper controlling module based on the signal from the object sensing device. The wiper is driven by a wiper driving apparatus, which is controlled based on the signal from the wiper controlling module.

**Claims**

1.   An object sensing device comprising:

a light source (10;20;90) for irradiating a sensing surface (110), which is an external surface of a transparent substrate (100);
an imaging optical system lens (40) for forming an image by a light from the sensing surface; and
a photo-detector array (50) for receiving the image formed by the imaging optical system lens, the photo-detector array including a plurality of photo-detectors (51);

wherein the photo-detector array receives the light from the imaging optical system lens, and outputs a signal pattern that depends on the level of light detection signals obtained from the respective photo-detectors and the positional arrangement of the photo-detectors and corresponds to a condition of an object present on the sensing surface,

wherein the object sensing device further comprises

a difference part for obtaining a differential signal of signal outputs from adjacent photo-detectors according to their arrangement in the photo-detector array, and

an object judging part for judging a presence of the object by detecting a presence of a pair of a positive peak and a negative peak in a pattern of the differential signal obtained by the difference part, **characterised in that** the object sensing device further comprises an estimating part for estimating a covering ratio of the object present on the sensing surface (110) from a ratio of a total length of the photo-detector array (50) to a sum of lengths, each being a length between a pair of the photo-detectors (51) on the photo-detector array corresponding to a pair of a positive peak and a negative peak in the differential signal pattern.

2.  The object sensing device according to claim 1, further comprising an estimating part for estimating a size of the object present on the sensing surface (110) by converting a length between a pair of the photo-detectors (51) on the photo-detector array (50) corresponding to a pair of a positive peak and a negative peak in the differential signal pattern into a length on the sensing surface.

3.  An object sensing device comprising;

a light source (10;20;90) for irradiating a sensing surface (110), which is an external surface of a transparent substrate (100);
an imaging optical system lens (40) for forming an image by a light from the sensing surface; and
a photo-detector array (50) for receiving the image formed by the imaging optical system lens, the photo-detector array including a plurality of photo-detectors (51);
wherein the photo-detector array receives the light from the imaging optical system lens, and outputs a signal pattern that depends on the level of light detection signals obtained from the respective photo-detectors and the positional arrangement of the photo-detectors and corresponds to a condition of an object present on the sensing surface,
wherein the object sensing device further comprises

a difference part for obtaining a differential signal of signal outputs from adjacent photo-detectors according to their arrangement in the photo-detector array, and
an object judging part for judging a presence of the object by detecting a presence of a pair of a positive peak and a negative peak in a pattern of the differential signal obtained by the difference part,

**characterised in that** the object sensing device further comprises an estimating part for estimating a covering ratio of the object present on the sensing surface (110) from a ratio of a sum of signal lengths of the differential signal pattern, each being a signal length between positions of the pair of the positive peak and the negative peak along a differential signal arrangement, with respect to a total length of the differential signal pattern.

4.  The object sensing device according to claim 1, 2 or 3, wherein the object judging part is provided with a threshold value for each of the positive peak and the negative peak.

5.  The object sensing device according to any preceding claim, wherein the object is a raindrop or a muddy water droplet.

6.  A wiper controlling apparatus for controlling a wiper (80) using information from the object sensing device according to any one.of claims 1 to 5.

7.  A method for sensing an object present on a sensing surface (110), which is an external surface of a transparent substrate (100), with a light source (20:30; 90) for irradiating the sensing surface, an imaging optical system lens (40) for forming an image by a light from the sensing surface, and a photo-detector array (50) for receiving the image formed by the imaging optical system lens, the photo-detector array including a plurality of photo-detectors (51), the object sensing method comprising:

with the photo-detector array, receiving the light from the imaging optical system lens, and outputting a signal pattern that depends on the level of light detection signals from the respective photo-detectors and the positional arrangement of the photo-detectors and corresponds to a condition of the object present on the sensing surface;
obtaining a differential signal of signal outputs from adjacent photo-detectors according to their arrangement in the photo-detector array; and

judging a presence of the object by detecting a presence of a pair of a positive peak and a negative peak in a pattern of the obtained differential signal, **characterised in that** a covering ratio of the object present on the sensing surface (110) is estimated from a ratio of a total length of the photo-detector array (50) to a sum of lengths, each being a length between a pair of the photo-detectors (51) on the photo-detector array corresponding to a pair of the positive peak and the negative peak in the differential signal pattern.

8. The method according to claim 7, wherein a size of the object present on the sensing surface (110) is estimated by converting a length between a pair of the photo-detectors (51) on the photo-detector array (50) corresponding to a pair of the positive peak and the negative peak in the differential signal pattern into a length on the sensing surface.

9. A method for sensing an object present on a sensing surface (110), which is an external surface of a transparent substrate (100), with a light source (20;30; 90) for irradiating the sensing surface, an imaging optical system lens (40) for forming an image by a light from the sensing surface, and a photo-detector array (50) for receiving the image formed by the imaging optical system lens, the photo-detector array including a plurality of photo-detectors (51), the object sensing method comprising:

with the photo-detector array, receiving the light from the imaging optical system lens, and outputting a signal pattern that depends on the level of light detection signals from the respective photo-detectors and the positional arrangement of the photo-detectors and corresponds to a condition of the object present on the sensing surface;
obtaining a differential signal of signal outputs from adjacent photo-detectors according to their arrangement in the photo-detector array; and
judging a presence of the object by detecting a presence of a pair of a positive peak and a negative peak in a pattern of the obtained differential signal, **characterised in that** a covering ratio of the object present on the sensing surface (110) is estimated from a ratio of a sum of signal lengths of the differential signal pattern, each being a signal length between positions of the pair of the positive peak and the negative peak along a differential signal arrangement, with respect to a total length of the differential signal pattern.

10. The method according to any one of claims 7, 8 or 9, wherein the presence of the object is judged based on a threshold value for each of the positive peak and the negative peak.

11. The method according to any of claims 7 to 10, wherein the object is a raindrop or a muddy water droplet.

12. A method for controlling a wiper (80) using information obtained by the object sensing method according to any one of claims 7 to 11.

**Patentansprüche**

1. Objekterfassungsvorrichtung, welche aufweist:

eine Lichtquelle (10; 20; 90) zum Bestrahlen einer Erfassungsfläche (110), die eine Außenfläche eines transparenten Substrats (100) ist,
eine Linse (40) eines optischen Abbildungssystems zur Erzeugung eines Bilds durch Licht von der Erfassungsfläche und
ein Photodetektor-Array (50) zum Empfangen des von der Linse des optischen Abbildungssystems erzeugten Bilds, wobei das Photodetektor-Array eine Mehrzahl von Photodetektoren (51) aufweist,

wobei das Photodetektor-Array das Licht von der Linse des optischen Abbildungssystems empfängt und ein Signalmuster ausgibt, das von dem Pegel der von den jeweiligen Photodetektoren erhaltenen Lichtdetektionssignale und der Positionierung der Photodetektoren abhängt und einem Zustand eines auf der Erfassungsfläche vorhandenen Objekts entspricht,
wobei die Objekterfassungsvorrichtung weiter aufweist:

einen Differenzteil zum Erhalten eines differenziellen Signals von Signalausgaben von benachbarten Photodetektoren entsprechend ihrer Anordnung in dem Photodetektor-Array und
einen Objektbeurteilungsteil zum Beurteilen eines Vorhandenseins des Objekts durch Detektieren eines Vorhandenseins eines Paars aus einer positiven Spitze und einer negativen Spitze in einem Muster des vom Differenzteil erhaltenen differenziellen Signals,

**dadurch gekennzeichnet, dass**

die Objekterfassungsvorrichtung weiter aufweist: einen Schätzteil zum Schätzen eines Abdeckungsverhältnisses des auf der Erfassungsfläche (110) vorhandenen Objekts anhand eines Verhältnisses zwischen einer Gesamtlänge des Photodetektor-Arrays (50) und einer Summe der Längen, die jeweils eine Länge zwischen einem Paar der Photodetektoren (51) auf dem Photodetektor-Array, entsprechend einem Paar einer positiven Spitze und einer negativen Spitze in dem Muster des differenziellen Signals; sind.

2. Objekterfassungsvorrichtung nach Anspruch 1, welche weiter aufweist: einen Schätzteil zum Schätzen einer Größe des auf der Erfassungsfläche (110) vorhandenen Objekts durch Umwandeln einer Länge zwischen einem Paar der Photodetektoren (51) auf dem Photodetektor-Array (50), entsprechend einem Paar aus einer positiven Spitze und einer negativen Spitze in dem Muster des differenziellen Signals, zu einer Länge auf der Erfassungsfläche.

3. Objekterfassungsvorrichtung, welche aufweist:

eine Lichtquelle (10; 20; 90) zum Bestrahlen einer Erfassungsfläche (110), die eine Außenfläche eines transparenten Substrats (100) ist,
eine Linse (40) eines optischen Abbildungssystems zur Erzeugung eines Bilds durch Licht von der Erfassungsfläche und
ein Photodetektor-Array (50) zum Empfangen des von der Linse des optischen Abbildungssystems erzeugten Bilds, wobei das Photodetektor-Array eine Mehrzahl von Photodetektoren (51) aufweist,

wobei das Photodetektor-Array das Licht von der Linse des optischen Abbildungssystems empfängt und ein Signalmuster ausgibt, das von dem Pegel der von den jeweiligen Photodetektoren erhaltenen Lichtdetektionssignale und der Positionierung der Photodetektoren abhängt und einem Zustand eines auf der Erfassungsfläche vorhandenen Objekts entspricht,
wobei die Objekterfassungsvorrichtung weiter aufweist:

einen Differenzteil zum Erhalten eines differenziellen Signals von Signalausgaben von benachbarten Photodetektoren entsprechend ihrer Anordnung in dem Photodetektor-Array und
einen Objektbeurteilungsteil zum Beurteilen eines Vorhandenseins des Objekts durch Detektieren eines Vorhandenseins eines Paars aus einer positiven Spitze und einer negativen Spitze in einem Muster des vom Differenzteil erhaltenen differenziellen Signals,

**dadurch gekennzeichnet, dass**

die Objekterfassungsvorrichtung weiter aufweist: einen Schätzteil zum Schätzen eines Abdeckungsverhältnisses des auf der Erfassungsfläche (110) vorhandenen Objekts anhand eines Verhältnisses einer Summe der Signallängen des Musters des differenziellen Signals, die jeweils die Signallänge zwischen Positionen des Paars aus der positiven Spitze und der negativen Spitze entlang einer Anordnung des differenziellen Signals sind, in Bezug auf eine Gesamtlänge des Musters des differenziellen Signals.

4. Objekterfassungsvorrichtung nach Anspruch 1, 2 oder 3, wobei der Objektbeurteilungsteil mit einem Schwellenwert für jede von der positiven Spitze und der negativen Spitze versehen ist.

5. Objekterfassungsvorrichtung nach einem der voranstehenden Ansprüche, wobei das Objekt ein Regentropfen oder ein Tröpfchen trüben Wassers ist.

6. Wischersteuervorrichtung zum Steuern eines Wischers (80) unter Verwendung von Informationen von der Objekterfassungsvorrichtung nach einem der Ansprüche 1 bis 5.

7. Verfahren zum Erfassen eines auf einer Erfassungsfläche (110), die eine Außenfläche eines transparenten Substrats (100) ist, vorhandenen Objekts mit einer Lichtquelle (20; 30; 90) zum Bestrahlen der Erfassungsfläche, einer Linse (40) eines optischen Abbildungssystems zur Erzeugung eines Bilds durch Licht von der Erfassungsfläche und einem Photodetektor-Array (50) zum Empfangen des von der Linse des optischen Abbildungssystems erzeugten Bilds, wobei das Photodetektor-Array eine Mehrzahl von Photodetektoren (51) aufweist, wobei das Objekterfassungsverfahren aufweist:

Empfangen des Lichts von der Linse des optischen Abbildungssystems und Ausgeben eines Signalmusters, das vom Pegel der Lichtdetektionssignale von den jeweiligen Photodetektoren und der Positionierung der Photodetektoren abhängt und einem Zustand des auf der Erfassungsfläche vorhandenen Objekts entspricht, mit dem Photodetektor-Array, Erhalten eines differenziellen Signals von Signalausgaben von benachbarten Photodetektoren entsprechend ihrer Anordnung in dem Photodetektor-Array und

Beurteilen eines Vorhandenseins des Objekts durch Detektieren eines Vorhandenseins eines Paars aus einer positiven Spitze und einer negativen Spitze in einem Muster des erhaltenen differenziellen Signals,

**dadurch gekennzeichnet, dass**

ein Abdeckungsverhältnis des auf der Erfassungsfläche (110) vorhandenen Objekts anhand eines Verhältnisses zwischen einer Gesamtlänge des Photodetektor-Arrays (50) und einer Summe der Längen, die jeweils die Länge zwischen einem Paar der Photodetektoren (51) auf dem Photodetektor-Array sind, entsprechend einem Paar aus der positiven Spitze und der negativen Spitze in dem Muster des differenziellen Signals, geschätzt wird.

8. Verfahren nach Anspruch 7, wobei eine Größe des auf der Erfassungsfläche (110) vorhandenen Objekts durch Umwandeln einer Länge zwischen einem Paar der Photodetektoren (51) auf dem Photodetektor-Array (50), entsprechend einem Paar aus der positiven Spitze und der negativen Spitze in dem Muster des differenziellen Signals, zu einer Länge auf der Erfassungsfläche geschätzt wird.

9. Verfahren zum Erfassen eines auf einer Erfassungsfläche (110), die eine Außenfläche eines transparenten Substrats (100) ist, vorhandenen Objekts mit einer Lichtquelle (20; 30; 90) zum Bestrahlen der Erfassungsfläche, einer Linse (40) eines optischen Abbildungssystems zur Erzeugung eines Bilds durch Licht von der Erfassungsfläche und einem Photodetektor-Array (50) zum Empfangen des von der Linse des optischen Abbildungssystems erzeugten Bilds, wobei das Photodetektor-Array eine Mehrzahl von Photodetektoren (51) aufweist, wobei das Objekterfassungsverfahren aufweist:

Empfangen des Lichts von der Linse des optischen Abbildungssystems und Ausgeben eines Signalmusters, das vom Pegel der Lichtdetektionssignale von den jeweiligen Photodetektoren und der Positionierung der Photodetektoren abhängt und einem Zustand des auf der Erfassungsfläche vorhandenen Objekts entspricht, mit dem Photodetektor-Array,

Erhalten eines differenziellen Signals von Signalausgaben von benachbarten Photodetektoren entsprechend ihrer Anordnung in dem Photodetektor-Array und

Beurteilen eines Vorhandenseins des Objekts durch Detektieren eines Vorhandenseins eines Paars aus einer positiven Spitze und einer negativen Spitze in einem Muster des erhaltenen differenziellen Signals,

**dadurch gekennzeichnet, dass**

ein Abdeckungsverhältnis des auf der Erfassungsfläche (110) vorhandenen Objekts anhand eines Verhältnisses einer Summe der Signallängen des Musters des differenziellen Signals, die jeweils eine Signallänge zwischen Positionen des Paars aus der positiven Spitze und der negativen Spitze entlang einer Anordnung des differenziellen Signals sind, in Bezug auf eine Gesamtlänge des Musters des differenziellen Signals geschätzt wird.

10. Verfahren nach einem der Ansprüche 7, 8 oder 9, wobei das Vorhandensein des Objekts auf der Grundlage eines Schwellenwerts für jede von der positiven Spitze und der negativen Spitze beurteilt wird.

11. Verfahren nach einem der Ansprüche 7 bis 10, wobei das Objekt ein Regentropfen oder ein Tröpfchen trüben Wassers ist.

12. Verfahren zum Steuern eines Wischers (80) unter Verwendung von Informationen, die durch das Objekterfassungsverfahren nach einem der Ansprüche 7 bis 11 erhalten wurden.

**Revendications**

1. Dispositif de détection d'objet comprenant:

une source de lumière (10; 20; 90) pour irradier une surface de détection (110), qui est une surface externe d'un substrat transparent(100) ;

une lentille de système optique d'imagerie (40) pour former une image grâce à une lumière provenant de la surface de détection ; et

un tableau de photodétecteurs (50) pour recevoir l'image formée par la lentille de système optique d'imagerie, le tableau de photodétecteurs comprenant une pluralité de photodétecteurs (51);

dans lequel le tableau de photodétecteurs reçoit la lumière de la lentille de système optique d'imagerie et fournit en sortie un motif de signal qui dépend du niveau des signaux de détection de lumière obtenus à partir des photodétecteurs respectifs et de l'agencement positionnel des photodétecteurs, et correspond à une condition d'un objet présent sur la surface de détection ;
dans lequel le dispositif de détection d'objet comprend en outre

une partie de différence pour obtenir un signal différentiel de sorties de signaux à partir de photodétecteurs adjacents selon leur agencement dans le tableau de photodétecteurs ; et
une partie de jugement d'objet pour juger d'une présence de l'objet en détectant la présence d'une paire d'une crête positive et d'une crête négative dans un motif du signal différentiel obtenu par la partie de différence, **caractérisé en ce que** le dispositif de.détection d'objet comprend en outre une partie d'estimation pour estimer un rapport de couverture de l'objet présent sur la surface de détection (110) à partir d'un rapport d'une longueur totale du tableau de photodétecteurs (50) à une somme de longueurs, chacune étant une longueur entre une paire des photodétecteurs (51) sur le tableau de photodétecteurs correspondant à une paire d'une crête positive et d'une crête négative dans le motif de signal différentiel.

2. Dispositif de détection d'objet selon la revendication 1, comprenant en outre une partie d'estimation pour estimer une taille de l'objet présent sur la surface de détection (110) en convertissant une longueur entre une paire des photodétecteurs (51) sur le tableau de photodétecteurs (50) correspondant à une paire d'une crête positive et d'une crête négative dans le motif de signal différentiel en une longueur sur la surface de détection.

3. Dispositif de détection d'objet, comprenant :

une source de lumière (10 ; 20; 90) pour irradier une surface de détection (110), qui est une surface externe d'un substrat transparent(100) ;
une lentille de système optique d'imagerie (40) pour former une image grâce à une lumière provenant de la surface de détection ; et
un tableau de photodétecteurs (50) pour recevoir l'image formée par la lentille de système optique d'imagerie, le tableau de photodétecteurs comprenant une pluralité de photodétecteurs (51);

dans lequel le tableau de photodétecteurs reçoit la lumière de la lentille de système optique d'imagerie et fournit en sortie un motif de signal qui dépend du niveau des signaux de détection de lumière obtenus à partir des photodétecteurs respectifs et de l'agencement positionnel des photodétecteurs, et correspond à une condition d'un objet présent sur la surface de détection ;
dans lequel le dispositif de détection d'objet comprend en outre

une partie de différence pour obtenir un signal différentiel de sorties de signaux à partir de photodétecteurs adjacents selon leur agencement dans le tableau de photodétecteurs ; et
une partie de jugement d'objet pour juger d'une présence de l'objet en détectant la présence d'une paire d'une crête positive et d'une crête négative dans un motif du signal différentiel obtenu par la partie de différence, **caractérisé en ce que** le dispositif de détection d'objet comprend en outre une partie d'estimation pour estimer un rapport de couverture de l'objet présent sur la surface de détection (110) à partir d'un rapport d'une somme de longueurs de signal du motif de signal différentiel, chacune étant une longueur de signal entre des positions de la paire de la crête positive et de la crête négative le long d'un agencement de signal différentiel par rapport à une longueur totale du motif de signal différentiel.

4. Dispositif de détection d'objet selon les revendications 1, 2 ou 3, dans lequel la partie de jugement d'objet est pourvue d'une valeur de seuil pour chacune des crêtes positive et négative.

5. Dispositif de détection d'objet selon l'une quelconque des revendications précédentes, dans lequel l'objet est une goutte de pluie ou une goutte d'eau boueuse.

6. Appareil de commande d'essuie-glace pour commander un essuie-glace (80) en utilisant des informations provenant du dispositif de détection d'objet selon l'une quelconque des revendications 1 à 5.

7. Procédé pour détecter un objet présent sur une surface de détection (110), qui est une surface externe d'un substrat transparent (100), avec une source de lumière (20 ; 30 ; 90) pour irradier la surface de détection, une lentille de système optique d'imagerie (40) pour former une image grâce à une lumière provenant de la surface de détection et un tableau de photodétecteurs (50) pour recevoir l'image formée par la lentille de système optique d'imagerie, le tableau de photodétecteurs comprenant une pluralité de photodétecteurs (51), le procédé de détection d'objet comprenant les étapes suivantes :

recevoir, à l'aide du tableau de photodétecteurs, la lumière de la lentille de système optique d'imagerie et fournir en sortie un motif de signal qui dépend du niveau des signaux de détection de lumière provenant des photodétecteurs respectifs et de l'agencement positionnel des photodétecteurs, et correspond à une condition de l'objet présent sur la surface de détection ;
obtenir un signal différentiel de sorties de signaux provenant de photodétecteurs adjacents selon leur agencement dans le tableau de photodétecteurs; et
juger d'une présence de l'objet en détectant la présence d'une paire d'une crête positive et d'une crête négative dans un motif du signal différentiel obtenu,

**caractérisé en ce qu'**un rapport de couverture de l'objet présent sur la surface de détection (110) est estimé à partir d'un rapport d'une longueur totale du tableau de photodétecteurs (50) à une somme de longueurs, chacune étant une longueur entre une paire des photodétecteurs (51) sur le tableau de photodétecteurs correspondant à une paire de la crête positive et de la crête négative dans le motif de signal différentiel.

8. Procédé selon la revendication 7, dans lequel une taille de l'objet présent sur la surface de détection (110) est estimée en convertissant une longueur entre une paire des photodétecteurs (51) sur le tableau de photodétecteurs (50) correspondant à une paire de la crête positive et de la crête négative dans le motif de signal différentiel en une longueur sur la surface de détection.

9. Procédé pour détecter un objet présent sur une surface de détection (110), qui est une surface externe d'un substrat transparent (100), avec une source de lumière (20 ; 30 ; 90) pour irradier la surface de détection, une lentille de système optique d'imagerie (40) pour former une image grâce à une lumière provenant de la surface de détection et un tableau de photodétecteurs (50) pour recevoir l'image formée par la lentille de système optique d'imagerie, le tableau de photodétecteurs comprenant une pluralité de photodétecteurs (51), le procédé de détection d'objet comprenant les étapes suivantes :

recevoir, à l'aide du tableau de photodétecteurs, la lumière de la lentille de système optique d'imagerie et fournir en sortie un motif de signal qui dépend du niveau des signaux de détection de lumière provenant des photodétecteurs respectifs et de l'agencement positionnel des photodétecteurs, et correspond à une condition de l'objet présent sur la surface de détection ;
obtenir un signal différentiel de sorties de signaux provenant de photodétecteurs adjacents selon leur agencement dans le tableau de photodétecteurs; et
juger d'une présence de l'objet en détectant la présence d'une paire d'une crête positive et d'une crête négative dans un motif du signal différentiel obtenu,

**caractérisé en ce qu'**un rapport de couverture de l'objet présent sur la surface de détection (110) est estimé à partir d'un rapport d'une somme de longueurs de signal du motif de signal différentiel, chacune étant une longueur de signal entre des positions de la paire de la crête positive et de la crête,négative le long d'un agencement de signal différentiel par rapport à une longueur totale du motif de signal différentiel.

10. Procédé selon l'une quelconque des revendications 7, 8 ou 9, dans lequel la présence de l'objet est jugée sur la base d'une valeur de seuil pour chacune des crêtes positive et négative.

11. Procédé selon l'une quelconque des revendications 7 à 10, dans lequel l'objet est une goutte de pluie ou une goutte d'eau boueuse.

12. Procédé de commande d'un essuie-glace (80) utilisant des informations obtenues par le procédé de détection d'objet selon l'une quelconque des revendications 7 à 11.

Inside a car

Outside

FIG.1

Raindrop present(without external light)

FIG. 2A

Raindrop present(with external light)

FIG. 2B

FIG.3A

FIG.3B

FIG.4

FIG.5

FIG.6A

FIG.6B

Inside a car

Outside

10

30a

20

30c

40

50

60

110

100

15

120

EP 1 258 403 B1

Raindrop present(without external light)

FIG. 7A

Raindrop present(without external light)

FIG. 7B

FIG. 7C

Raindrop present (with external light)

FIG. 8A

Raindrop present (with external light)

FIG. 8B

Muddy water droplet present
(without external light)

FIG. 9A

Muddy water droplet present
(without external light)

FIG. 9B

EP 1 258 403 B1

**FIG.10A**

10
30a
20
30c
40
50
60

Inside a car

~100

110

Outside

120

**FIG.10B**

10
30a
20
30c
40
50
60

Inside a car

~100

Outside

130    110

Muddy water droplet present
(with external light)

FIG. 11A

Muddy water droplet present
(with external light)

FIG. 11B

FIG.12

FIG.13

FIG.14

EP 1 258 403 B1

**REFERENCES CITED IN THE DESCRIPTION**

**Patent documents cited in the description**

- US 4659220 A
- US 5923027 A
- WO 9923828 A